# DEMANDE DE BREVET EUROPEEN

(11) **EP 1 584 392 A1**
(43) Date de publication de la demande: **12.10.2005**
(21) Numéro de dépôt: 05290714.4
(22) Date de dépôt: 31.03.2005
(51) Int. Cl.: B23D 47/10, B23D 59/02, B27G 19/02

(54) **Module, dispositif et procédé de sciage**

(30) Priorité: 05.04.2004 FR 0403569
(71) Demandeur: Tecma S.A.S., Cedex (FR)
(72) Inventeur: Gautier, Marc, 14400 Bayeux (FR)
(74) Mandataire: Maillet, Alain

(57) **Abrégé**

Module de sciage (100) comprenant :
une lame de scie (204) définissant un plan P;
un dispositif d'appui monté sur le module de sciage (100) et mobile en translation parallèlement au plan P par rapport au module de sciage (100); et
un générateur de force (112) adapté à générer une force sur le dispositif d'appui dans une direction parallèle au plan P.

Le module de sciage (100) étant caractérisé en ce que la force générée se trouve sensiblement dans le plan P.

## Description

L'invention concerne un module de sciage. L'invention concerne aussi un dispositif de sciage comprenant un tel module de sciage. L'invention concerne aussi un procédé de sciage à l'aide d'un tel dispositif de sciage. Elle trouve application dans le domaine des machines outils, en particulier dans le domaine du sciage de joints en caoutchouc.

Les joints en caoutchouc, en particulier pour les joints de portes ou de coffres de véhicule, sont généralement réalisés par extrusion. Après extrusion ces joints sont coupés à la longueur désirée.

La découpe de ces joints est réalisée par des scies circulaires qui tournent à grande vitesse.

Un dispositif de sciage est décrit dans la demande de brevet EP-A-0 109 632. Le dispositif comprend un module de sciage, un socle et un dispositif de transfert permettant de faire monter et descendre le module de sciage par rapport au socle. Le module de sciage comprend une scie circulaire qui tourne à l'intérieur d'une cage comprenant une partie supérieure fixée au châssis du module de sciage et une partie inférieure coulissante par rapport à la partie supérieure et à travers laquelle la scie opère. La scie circulaire défini un plan P. Le module de sciage est mobile en translation entre une position d'attente et une position de sciage parallèlement au plan P. Le coulissement des deux parties l'une par rapport à l'autre est réalisé d'une manière télescopique par la mise en place de la partie inférieure autour de la partie supérieure et par la mise en place d'une glissière munie d'un ressort entre les deux parties. Lors de l'utilisation, le module de sciage est abaissé vers le socle, la partie inférieure vient en contact avec la pièce à découper ou avec une butée du socle. Le module de sciage poursuit sa descente tandis que la partie inférieure de la cage est arrêtée. La glissière permet alors le coulissement des deux parties l'une par rapport à l'autre. La scie sort alors de la partie inférieure et découpe la pièce fixée sur le socle. Lors de la remontée du module de sciage, la partie inférieure revient en place grâce à l'utilisation au ressort qui repousse la partie inférieure de la cage.

Dans le cas de sciage d'un matériau flexible, comme des joints, ces joints sont positionnés dans des boîtes à coupe qui les maintiennent lors du sciage, ces boîtes à coupe sont elles-mêmes fixées sur le socle.

Si le joint est entièrement contenu dans la boîte à coupe, le joint sera parfaitement maintenu lors du sciage. Si le joint dépasse hors de la boîte à coupe, la partie hors de la boîte à coupe ne sera pas maintenue lors de la découpe et elle risque d'être détériorée par le passage de la lame de scie.

Le module de sciage décrit dans la demande de brevet EP-A-0 109 632, n'est pas adapté à une telle utilisation. En effet, le positionnement décentré de la glissière génère une force inégalement répartie sur la partie inférieure et. donc sur l'élément à scier. La force de contact entre la partie inférieure et l'élément à scier est plus importante du côté de la lame de scie où se trouve le ressort que de l'autre.côté..

Un objet de la présente invention est de proposer un module de sciage qui ne présente pas les inconvénients de l'art antérieur.

A cet effet, est proposé un module de sciage comprenant:
une lame de scie définissant un plan P;
un dispositif d'appui qui comprend un dispositif de protection de la lame de scie comprenant lui-même deux capots pour y loger la lame de scie, le dispositif d'appui étant monté sur le module de sciage et mobile en translation parallèlement au plan P par rapport au module de sciage; et
un générateur de force adapté à générer une force sur le dispositif d'appui dans une direction parallèle au plan P et se trouvant sensiblement dans le plan P;
le module de sciage. étant caractérisé en ce que le dispositif de protection comprend un serre flanc qui contribue à maintenir les deux capots solidaires.

Avantageusement le point d'application de la force générée se trouve sensiblement dans le plan médian du dispositif d'appui et orthogonal au plan P.

Avantageusement le serre flanc est adapté a transmettre la force sur l'élément à scier.

Avantageusement le serre flanc comprend une empreinte complémentaire de la forme de l'élément à scier.

Avantageusement le serre flanc comprend une fente qui permet le passage de la lame de scie, et la fente débouche par un orifice juste suffisant pour laisser passer la lame de scie.

Avantageusement le serre flanc comprend un joint de contact situé autour de l'orifice.

Avantageusement le serre flanc comprend des rainures d'alignement qui coopèrent avec des plots de l'un des capots et àu moins un ergot qui coopère avec une rainure de maintien de l'autre capot.

Avantageusement le dispositif d'appui comprend deux rails de guidage qui coopèrent avec des coulisses de guidage fixés au module de sciage.

Avantageusement, le dispositif de protection comprend un dispositif de lubrification adapté à lubrifier les deux faces et le tranchant de la lame de scie lors du sciage.

Avantageusement le générateur de force délivre une force minimale de 20 N.

L'invention propose aussi un dispositif de sciage comprenant un socle, au moins un module de sciage selon l'une des variantes précédentes monté en vis-à-vis du socle et un dispositif de transfert; caractérisé en ce que le dispositif de transfert est adapté à rapprocher le socle et le module de sciage d'une position d'attente vers une position de sciage.

L'invention propose aussi un procédé de sciage d'un joint à l'aide d'un dispositif de sciage selon la variante précédente, caractérisé en ce que le procédé comprend:
une étape de fixation d'une boîte à coupe dans laquelle loge un joint à scier sur le socle;
une étape de rapprochement du module de sciage et du socle vers la position de sciage grâce au dispositif de transfert;
une étape de mise sous pression du joint à découper par le dispositif d'appui;
une étape de mise en position de sciage du module de sciage;
une étape de sciage du joint à scier par la lame de scie;
une étape d'écartement du module de sciage et du socle vers la position d'attente.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente deux modules de sciage selon l'invention montés sur un dispositif de sciage;
la Fig. 2 représente une vue en coupe selon la ligne II-II de la Fig. 3 d'un module de sciage selon l'invention;
la Fig. 3 représente une vue en coupe selon la ligne III-III de la Fig. 2;
la Fig. 4 est un agrandissement du détail IV de la Fig. 2;
la Fig. 5 est une vue en perspective d'un module de sciage et de l'élément à scier dans la position d'attente;
la Fig. 6 est une vue en perspective d'un module de sciage et de l'élément à scier dans la position de sciage
la Fig. 7 représente une vue en perspective d'un dispositif de lubrification.

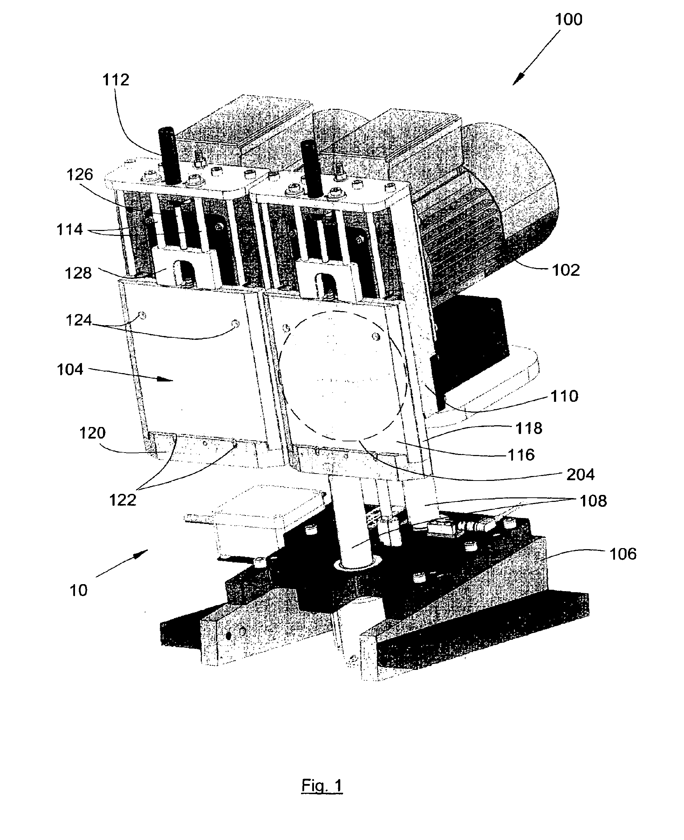

La Fig. 1 représente dispositif de sciage 10 comprenant un couple de modules de sciage 100, mais il est possible d'utiliser un seul module de sciage.

Le dispositif de sciage 10 comprend aussi un socle 106 et un dispositif de transfert.

Le dispositif de transfert peut être tout système qui permet de rapprocher le module de sciage 100 du socle 106, à partir d'une position d'attente (Fig. 5) vers une position de sciage (Fig. 6).

Dans le cas du sciage d'un joint 504, une boîte à coupe 502 vient se fixer sur le socle 106. Le joint à scier 504 est maintenu dans une rainure 506 de la boîte à coupe 502. La rainure 506 est généralement adaptée à la forme du joint à scier 504.

Le module de sciage 100 comprend un châssis 110 sur lequel les autres composants se fixent..Le dispositif de sciage 10 va être décrit en particulier dans le cas du sciage d'un joint, mais il est approprié au sciage d'éléments dont une partie flexible n'est pas maintenu lors du sciage.

Le module de sciage 100 est monté en vis-à-vis du socle 106 par l'intermédiaire de bras supports 108. Le module de sciage 100 est mobile le long des bras supports 108 entre la position d'attente et la position de sciage grâce au dispositif de transfert. Le mouvement du module de sciage 100 permet l'abaissement du module de sciage 100 vers le socle 106.

Le module de sciage 100 comprend un moteur 102 qui entraîne une lame de scie 204 (représentée en traits pointillés). L'entraînement peut se faire directement en sortie d'arbre moteur ou par l'intermédiaire d'un dispositif de réduction. La lame de scie 204 est une lame circulaire avec ou sans dent. Le plan de la lame de scie 204 définit un plan P. La lame de scie 204 est adaptée à scier le joint 504 lorsque le module de sciage 100 est en position de sciage.

Le module de sciage 100 comprend un dispositif d'appui qui, en position de sciage, vient en contact avec le joint à scier 504. Le dispositif d'appui est monté sur le module de sciage 100. Le dispositif d'appui est mobile en translation par rapport au module de sciage 100 parallèlement au plan P.

Le module de sciage 100 comprend un générateur de force 112 qui génère une forcé sur le dispositif d'appui parallèlement au plan P.

La force générée se trouve sensiblement dans le plan P, ainsi la force qui se transmet du dispositif d'appui au joint à scier 504 est également répartie de part et d'autre de la lame de scie 204. Les forces qui s'exercent alors de part et d'autre de la lame de scie 204 sur le joint à scier 504 réalisent un maintien équilibré du joint. Le maintien du joint à scier 504 pendant le sciage évite le déchirement de celui-ci par la lame de scie 204 et permet un sciage propre de ce joint. La force s'exerce en particulier sur la partie flexible du joint qui n'est pas maintenu par la boîte à coupe.

Pour améliorer encore la répartition des forces, le point d'application de la force générée est sensiblement placé dans le plan médian du dispositif d'appui qui est orthogonal au plan P.

Le dispositif d'appui peut constituer un dispositif de protection 104 de la lame de scie 204. Le dispositif de protection 104 protège l'utilisateur de la lame de scie 204. La réunion du dispositif d'appui et du dispositif de protection en un seul élément permet une simplification du montage du module de sciage 100.

Pour protéger le technicien, la lame de scie 204 est logée dans le dispositif de protection 104. Le dispositif de protection 104 comprend un capot extérieur 116 et un capot intérieur 118. Les deux capots sont- fixés l'un à l'autre grâce à des vis de fixation 124 placées au dessus de la lame de scie 204. Les capots 116, 118 sont avantageusement réalisés en alliage d'aluminium ou en tout matériau adéquats.

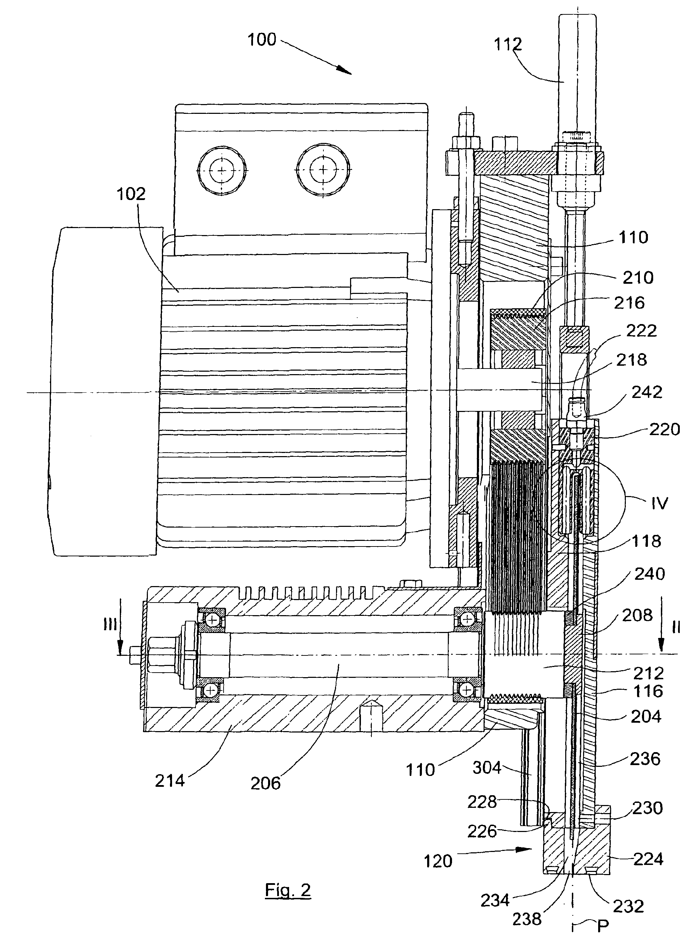

Les capots définissent un espace 236 (Fig. 2) dans lequel la lame de scie 204 se déplace.

Pour éviter l'écartement des parties basses des capots sous l'effet de la rotation de la lame de scie 204, un serre flanc 120 est mis en place pour venir prendre en sandwich les parties inférieures des deux capots (Fig. 2). L'utilisation d'éléments de fixation traversant le passage de la lame de scie 204 pour fixer les deux capots est en effet impossible. Le serre flanc 120 contribue donc à maintenir les deux capots 116, 118 solidaires.

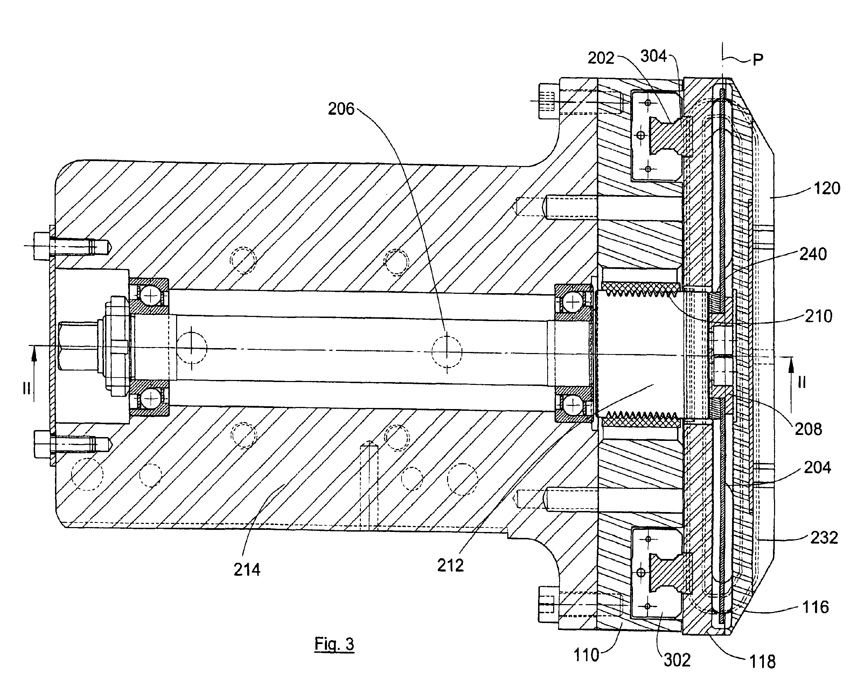

Le montage du dispositif de protection 104 va être décrit en relation avec la Fig. 3. Le dispositif de protection 104 est monté mobile sur le châssis 110 par l'intermédiaire de rails de guidage 304. Des coulisses de guidage 302 sont montées dans le châssis 110 du module de sciage 100. Les rails de guidage 304 coulissent à l'intérieur de rainures de guidage 202 réalisées dans les coulisses de guidage 302. Ce type de montage est particulièrement précis et permet un bon alignement entre la lame de scie 204 et le dispositif de protection 104.

L'utilisation de deux rails de guidage 304 parallèles permet un coulissement précis du dispositif de protection 104 par rapport au châssis 110.

Le fait que la force appuie d'une manière équilibré sur le dispositif de protection 104 évite les coincements dus à un déplacement de travers du dispositif de protection 104. L'espace nécessaire entre la lame de scie 204 et le dispositif de protection 104 peut être réduit au minimum, ce qui réduit l'encombrement du dispositif de sciage 10.

Le dispositif de protection 104 comprend aussi un pont 128 qui est placé de manière centrale sur la partie supérieure du dispositif de protection 104. Un connecteur de lubrification 242 est mis en place sous le pont 128.

Le générateur de force 112 appuie sur le dispositif de protection 104 par l'intermédiaire du pont 128 et d'une tige de poussée 126, placée entre le pont 128 et le générateur de force 112. Le générateur de force 112 peut être tous dispositifs de pression comme par exemple un ressort de compression, un ressort à gaz, un vérin, etc.

Le générateur de force 112 permet l'abaissement du dispositif de protection 104 et la mise,sous pression du joint à scier 504 par le dispositif de protection 104. La force exercée par le générateur de force 112 est au minimum de 20 N pour appuyer et maintenir efficacement le joint à scier.

Pour empêcher que le dispositif de protection 104 ne descende trop bas lorsque le module de sciage 100 est en position d'attente, des axes 114, qui servent de butée sur le châssis 110, sont fixés sur le pont 128 et coulissent par rapport au châssis 110.

La Fig. 2 représente une coupe selon la ligne II-II de la Fig. 3 du module de sciage 100.

L'entraînement de la lame de scie 204 est ici réalisé de manière indirecte par une courroie 210. L'arbre de sortie du moteur 218 porte une poulie d'entraînement 216, sur laquelle engrène la courroie 210.

La lame de scie 204 est fixée sur un arbre de scie 206 par l'intermédiaire d'une bride 208. Pour ajuster la position de la lame de scie 204, une cale de réglage 240 est placée entre l'extrémité de l'arbre de scie 206 et la lame; de scie 204. Le positionnement de la lame de scie 204 est alors précis. La cale 240 et la lame de scie 204 sont prises en sandwich entre l'extrémité de l'arbre de scie 206 et la bride 208.

L'arbre de scie 206 porte une poulie d'entraînement 212 sur laquelle engrène la courroie 210. L'arbre de scie 206 et la poulie d'entraînement 212 peuvent être monobloc.

L'arbre de scie 206 est guidé en rotation par des roulements à billes et est logé dans un corps de broche 214 fixé au châssis 110.

Le dispositif de protection 104 comprend une dispositif de lubrification 220 alimenté par un flexible 222 connecté au connecteur de lubrification 242.

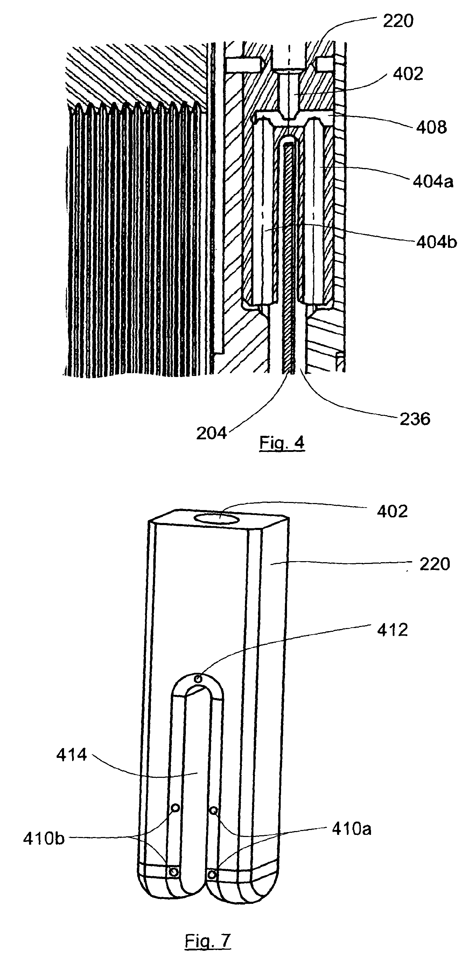

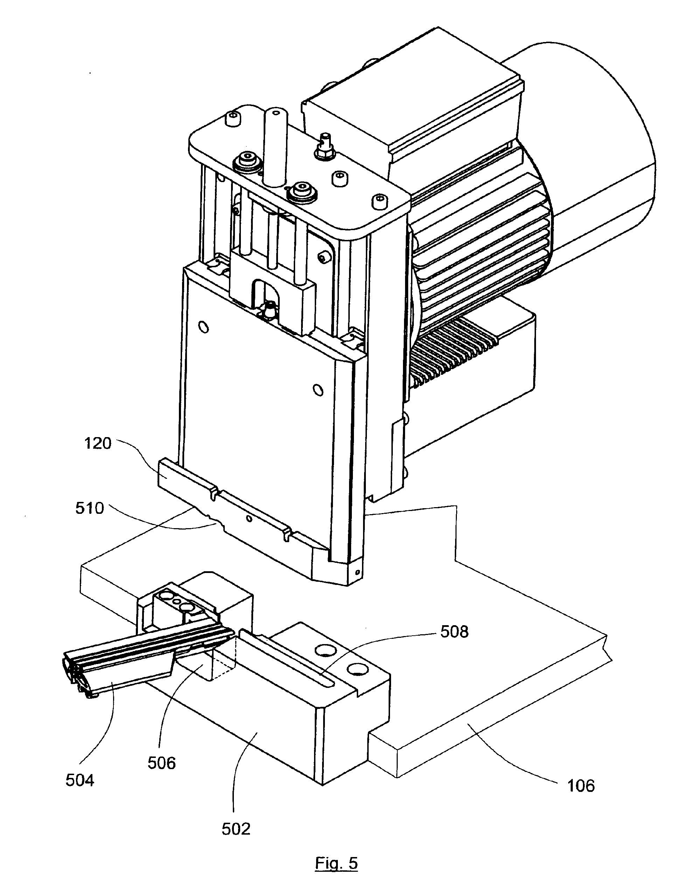

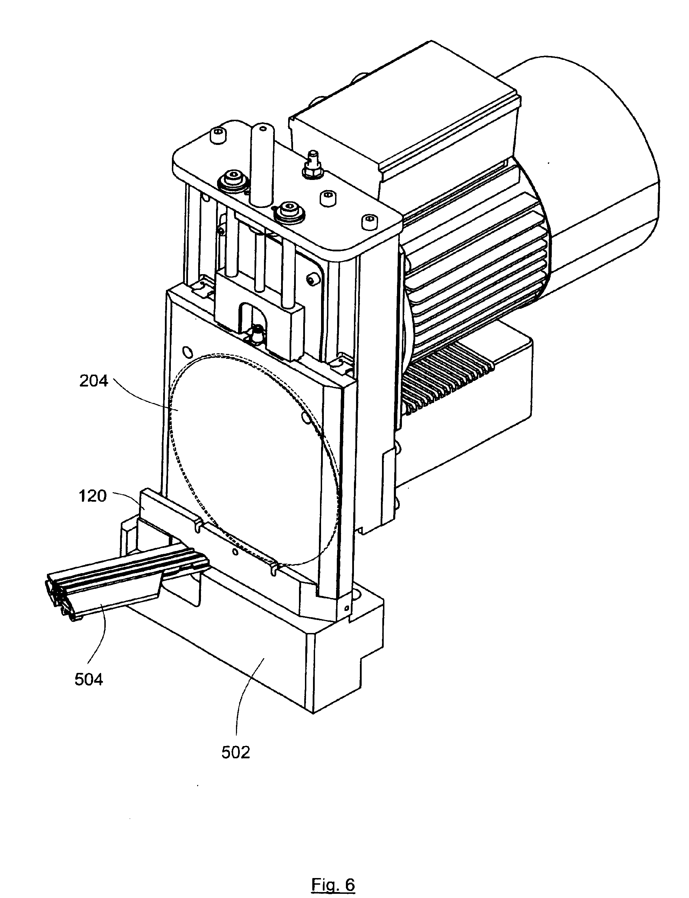

Le dispositif de lubrification 220 va maintenant être décrit en relation avec la Fig. 4 et la Fig. 7.

Le dispositif de lubrification 220 comprend un réservoir 402 connecté au flexible 222 et dans lequel arrive le liquide lubrifiant sous pression. Le liquide s'écoule dans un conduit de répartition 408 qui est relié à deux canaux d'écoulement 404a, 404b. Les canaux d'écoulement 404a, 404b débouchent de part et d'autre d'une tranchée 414. La lame de scie 204 est positionnée dans la tranchée 414. Les canaux d'écoulement 404a, 404b débouchent alors de part et d'autre de la lame dé scie 204 par des orifices 410a, 410b pour les lubrifier et sur le tranchant de la lame de scie 204 par l'orifice 412 pour le lubrifier lors du sciage.

Le serre flanc 120 est placé face au socle 106 et transmet la force générée par le générateur de force 112 sur le joint à scier 504 lorsque le module de sciage 100 est en position de sciage.

Le serre flanc 120 comprend des rainures d'alignement 122 qui viennent s'aligner avec des plots issus du capot extérieur 116. La fixation du serre flanc 120 sur le capot extérieur 116 peut se fait grâce à une vis qui vient se loger dans l'alésage 230 (Fig. 2).

Le serre flanc 120 comprend un corps 224 percé d'une fente 234 qui permet le passage de la lame de scie 204 lorsque le module de sciage 100 est en position de sciage et qui débouche vers le bas par un orifice 238.

La prise en sandwich des capots 116, 118 par le serre flanc 120 est assurée d'un côté par la partie qui comprend les rainures d'alignement 122 qui coopèrent avec les plots issus du capot extérieur 116, et de l'autre côté par au moins un ergot 226 issu du corps 224 du serre flanc 120 qui coopère avec une rainure de maintien 228 réalisé dans le capot intérieur 118. La partie du serre flanc 120 qui réalise la prise en sandwich a donc la forme d'un U dans lequel viennent se loger les capots 116, 118.

L'ajustement des différentes pièces est prévu pour éviter l'entrebâillement des deux capots et les mouvements du serre flanc 120 par rapport au capot extérieur 116.

Le dispositif de protection 104 a donc des dimensions très légèrement supérieures à celle de la lame de scie 204 mais elles restent inférieures à celles des dispositifs de l'état de la technique. La structure du dispositif de protection 104 est rigide et stable car les capots 116, 118 et le serre flanc 120 forment un ensemble monobloc.

Le corps du serre flanc 224 comprend une rainure de fixation 232, qui fait le tour de l'orifice 238. Dans la rainure de fixation 232, vient se loger un joint de contact, généralement en caoutchouc.

Le joint de contact vient appuyer sur le joint à scier 504 sous l'effet de la force délivrée par le générateur de force 112 pour le maintenir lors du sciage et éviter la détérioration du joint à scier 504 par les arrêtes du dispositif de protection 104. Le joint de contact sert aussi de joint d'étanchéité pour le liquide de lubrification, évitant ainsi les projections.

Le serre flanc 120 est facilement interchangeable pour pouvoir s'adapter à toutes formes de joints à découper.

Selon la forme du joint à scier 504, une empreinte 510 peut être réalisée dans la partie inférieure du serre flanc 120. L'empreinte 510 a une forme complémentaire de la forme du joint à scier 504. Le joint à scier 504 ne sera donc pas plaqué contre une surface plane mais contre une surface qui épouse ses formes, évitant ainsi l'écrasement excessif du joint à scier 504, qui pourrait créer des pliures dans le joint.

Le procédé de découpe va maintenant être décrit à partir de la Fig. 5 et de la Fig. 6. dans le cas d'un joint à scier 504 qui dépasse boîte à coupe 502.

La boîte à coupe 502 dans lequel loge le joint à scier 504 est fixée sur le socle 106 sous le module de sciage 100.

Le module de sciage 100 descend le long des bras support 108 grâce au dispositif de transfert.

Le dispositif de protection 104 vient alors appuyer sur le joint à scier 504 par l'intermédiaire du serre flanc 120 qui est soumis à la pression du générateur de force 112.

Le module de sciage 100 continue à descendre pour venir, se placer en position de sciage, ce qui à pour effet d'augmenter la pression qui s'exerce sur le joint et de faire descendre la lame de.scie 204.

La lame de scie 204 vient alors découper le joint qui est maintenu par le dispositif de protection 104 qui appuie dessus, évitant ainsi le déchirement du joint.

La lame de scie 204 pénètre alors dans une rainure 508 réalisée dans la boîte à coupe 502.

Le module de sciage 100 est alors remonté vers la position d'attente, entraînant le dispositif de protection 104 et libérant ainsi le joint scié.

Pour améliorer la découpe du joint, les zones du serre flanc 120 qui appuient sur le joint doivent être au plus près de celui-ci, c'est-à-dire que l'orifice 238 doit être juste suffisant pour laisser passer la lame de scie 204 et pour appuyer sur le joint à découper au plus prés de la lame de scie 204.

Lorsque le module de sciage 100 descend et lorsque le dispositif de protection 104 est arrêté, le dispositif de lubrification 220 est alimenté en liquide lubrifiant pour lubrifier la lame de scie mais il ne descend plus. La lame de scie 204 descend alors par rapport au dispositif de lubrification 220. Le liquide lubrifiant est alors projeté au plus près du.tranchant de la lame de scie 204 par les orifices 410a, 410b, 412.

Bien entendu, la présente invention n'est pas limitée aux exemples et modes de réalisation décrits et représentés, mais elle est susceptible de nombreuses variantes accessibles à l'homme de l'art.

Par exemple, le dispositif de protection est décrit comme étant monobloc, mais il peut être constitué d'une partie fixe et d'une partie mobile, par exemple si la réduction des dimensions du module de sciage n'est pas primordiale. Il suffit que le dispositif d'appui constitué de la partie mobile appuie sur le joint à découper au plus près de la lame de scie pour le maintenir lors du sciage.

Le passage de la position d'attente à la position de sciage a été décrit à partir d'un module de sciage mobile et d'un socle fixe, mais il peut être envisagé de rendre le module de sciage fixe et le socle mobile.

Le générateur de force a été décrit comme un élément unique, placé judicieusement pour générer une force également répartie, mais il est envisageable que le générateur de force soit constitué de plusieurs sous-ensembles qui génèrent chacun une partie de la force. Il suffit que la force résultante soit également répartie, c'est-à-dire dans le plan P.

Le dispositif de lubrification a été décrit dans le cas d'un module de sciage selon l'invention, mais ce dispositif peut s'appliquer à tous dispositifs de sciage qui comportent une lame de scie et un dispositif de protection mobile par rapport à la lame de scie et dans lequel est disposé le dispositif de lubrification.

## Revendications

1. Module de sciage (100) comprenant:
une lame de scie (204) définissant un plan P;
un dispositif d'appui qui comprend un dispositif de protection (104) de la lame de scie (204) comprenant lui-même deux capots (116, 118) pour y loger la lame de scie (204); le dispositif d'appui étant monté sur le module de sciage (100) et mobile en translation parallèlement au plan P par rapport au module de sciage (100); et
un générateur de force (112) adapté à générer une force sur le dispositif d'appui dans une direction parallèle au plan P et se trouvant sensiblement dans le plan P;
le module de sciage (100) étant **caractérisé en ce que** le dispositif de protection (104) comprend un serre flanc (120) qui contribue à maintenir les deux capots (116, 118) solidaires.

2. Module de sciage (100) selon la revendication 1, **caractérisé en ce que** le point d'application de la force générée se trouve sensiblement dans le plan médian du dispositif d'appui et orthogonal au plan P.

3. Module de sciage (100) selon l'une des revendications 1 à 2, **caractérisé en ce que** le serre flanc (120) est adapté à transmettre la force sur l'élément à scier:

4. Module de sciage (100) selon l'une des revendications 1 à 3, **caractérisé en ce que** le serre flanc (120) comprend une empreinte (510) complémentaire de la forme de l'élément à scier.

5. Module de sciage (100) selon l'une des revendications 1 à 4, **caractérisé en ce que** le serre flanc (120) comprend une fente (234) qui permet le passage de la lame de scie (204), et **en ce que** la fente (234) débouche par un orifice (238) juste suffisant pour laisser passer la lame de scie (204). -

6. Module de sciage (100) selon la revendication 5, **caractérisé en ce que** le serre flanc (120) comprend un joint de contact situé autour de l'orifice (238).

7. Module de sciage (100) selon l'une des revendications 1 à 6, **caractérisé en ce que** le serre flanc (120) comprend des rainures d'alignement (122) qui coopèrent avec des plots de l'un des capots (116) et au moins un ergot (226) qui coopère avec une rainure de maintien (228) de l'autre capot (118).

8. Module de sciage (100) selon l'une des revendications 1 à 7, **caractérisé en ce que** le dispositif d'appui (120) comprend deux rails de guidage (304) qui coopèrent avec des coulisses de guidage (302) fixés au module de sciage (100).

9. Module de sciage (100) selon la revendication 4, **caractérisé en ce que** le dispositif de protection (104) comprend un dispositif de lubrification (220) adapté à lubrifier les deux faces et le tranchant de la lame de scie (204) lors du sciage.

10. Module de sciage (100) selon la revendication 2, **caractérisé en ce que** le générateur de force (112) délivre une force minimale de 20 N.

11. Dispositif de sciage (10) comprenant un socle (106), au moins un module de sciage (100) selon l'une des revendications précédentes monté en vis-à-vis du socle (106) et un dispositif de transfert;
**caractérisé en ce que** le dispositif de transfert est adapté à rapprocher le socle (106) et le module de sciage (100) d'une position d'attente vers une position de sciage.

12. Procédé de sciage d'un joint à l'aide d'un dispositif de sciage (10) selon la revendication précédente, **caractérisé en ce que** le procédé comprend:
une étape de fixation d'une boîte à coupe (502) dans laquelle loge un joint à scier (504) sur le socle (106);
une étape de rapprochement du module de sciage (100) et du socle (106) vers la position de sciage grâce au dispositif de transfert;
une étape de mise sous pression du joint à découper par le dispositif d'appui;
une étape de mise en position de sciage du module de sciage (100);
une étape de sciage du joint à scier par la lame de scie (204);
une étape d'écartement du module de sciage (100) et du socle (106) vers la position d'attente.
